# EUROPÄISCHE PATENTSCHRIFT

(11) **EP 2 376 554 B1**
(45) Veröffentlichungstag und Bekanntmachung des Hinweises auf die Patenterteilung: **04.03.2015**
(21) Anmeldenummer: 09764816.6
(22) Anmeldetag: 03.12.2009
(51) Int. Cl.: C08G 18/42, C08G 18/40, C08G 18/48, C08G 18/66, C08G 18/76

(54) **WASSERGETRIEBENE HARTSCHAUMSTOFFE MIT VERBESSERTEN MECHANISCHEN EIGENSCHAFTEN BEI TIEFEN TEMPERATUREN**
WATER-BLOWN RIGID FOAMS WITH IMPROVED MECHANICAL PROPERTIES AT LOW TEMPERATURES
MOUSSES RIGIDES GONFLÉES À L'EAU, PRÉSENTANT DES PROPRIÉTÉS MÉCANIQUES AMÉLIORÉES À BASSE TEMPÉRATURE

(30) Priorität: 10.12.2008 EP 08171232
(43) Veröffentlichungstag der Anmeldung: 19.10.2011
(73) Patentinhaber: BASF SE, 67056 Ludwigshafen (DE)
(72) Erfinder: BALBO BLOCK, Marco, 49074 Osnabrück (DE); HWANG, Cheul Hyeon, Daejeon (KR)
(86) Internationale Anmeldenummer: PCT/EP2009/066330
(87) Internationale Veröffentlichungsnummer: WO 2010/066635

(56) Entgegenhaltungen:
- WO-A-2008/083996
- DE-A1- 19 742 012
- US-A- 5 770 635
- US-A1- 2007 015 842

## Beschreibung

Die vorliegende Erfindung betrifft einen harten Polyurethanschaumstoff, erhältlich durch Vermischen von (a) Isocyanaten, (b) Verbindungen mit gegenüber Isocyanaten reaktiven Gruppen, (c) Treibmittel, enthaltend Wasser, (d) Katalysatoren und gegebenenfalls (e) weiteren Additiven zu einer Reaktionsmischung, Auftragen der Reaktionsmischung auf ein Verstärkungsmittel und Aushärten der Reaktionsmischung, wobei die Isocyanate (a) eine Viskosität von maximal 500 mPas bei 25 °C aufweisen und die Verbindungen mit gegenüber Isocyanaten reaktiven Gruppen (b) ein Polyetherol (b1) mit einer Funktionalität von 4 oder größer und einer Viskosität bei 25 °C von 10000 mPas oder kleiner, ein Polyetherol (b2) mit einer Funktionalität von 3,5 oder kleiner und einer Viskosität bei 25°C von 600 mPas oder kleiner, ein Polyesterol (b3) mit einer Viskosität bei 25 °C von 2000 mPas oder kleiner, Kettenverlängerer (b4), enthaltend mindestens 30% sekundäre OH-Gruppen, und gegebenenfalls einen Vernetzer (b5) enthalten. Weiter betrifft die vorliegende Erfindung ein Verfahren zur Herstellung solcher harten Polyurethanschaumstoffe und die Verwendung der harten Polyurethanschaumstoffe zur Isolation von Flüssigerdgastanks.

Weitere Ausführungsformen der vorliegenden Erfindung sind den Ansprüchen, der Beschreibung und den Beispielen zu entnehmen. Es versteht sich, dass die vorstehend genannten und die nachstehend noch zu erläuternden Merkmale des erfindungsgemäßen Gegenstandes nicht nur in der jeweils angegebenen Kombination, sondern auch in anderen Kombinationen verwendbar sind, ohne den Rahmen der Erfindung zu verlassen.

Neben Erdöl stellt Erdgas eine der wichtigsten Energiequellen unserer Zeit dar. Um das Gas von den Quellen an den Kunden zu liefern, muss es aber meist über große Distanzen transportiert werden. Dies geschieht beispielsweise über Pipelines. Allerdings ist der Transport von Erdgas über Pipelines in entlegene Gebiete oder über sehr weite Strecken sehr teuer. Dazu kommt, dass es gegebenenfalls aufgrund der politischen Situation in manchen Ländern unmöglich ist, durch diese eine solche Pipeline hindurchzulegen. In solchen Fällen wird als Alternative häufig der Transport über den Seeweg in Erdgastankern (sogenannte LNG-carrier -liquified natural gas carrier) gewählt. Dazu wird das Erdgas an Land verflüssigt und in riesige Tanks an Bord von Schiffen gegeben. Da Erdgas nur bei sehr niedrigen Temperaturen von ca. -160 °C verflüssigt werden kann und auch bei diesen Temperaturen gelagert und transportiert werden muss, ist es erforderlich, die Tanks, speziell an Bord von Schiffen, so gut wie möglich zu isolieren, um den Verlust von Flüssiggas durch Verdampfen gering zu halten.

Als Isolationsmaterial werden vor allem Polyurethanhartschaumstoffe aufgrund ihrer herausragenden Isolationseigenschaften im Vergleich zu anderen Isolationsmaterialien, wie Polystyrolschaumstoff oder Mineralwolle, eingesetzt.

Die gesamte Isolationskonstruktion in Erdgastankern ist äußerst komplex. So muss die Isolierung der Tanks nicht nur das Verdampfen von Erdgas verhindern, sondern muss den Tanks auch ein gewisses Maß an Stabilität bieten. Somit werden neben Polyurethanhartschaumstoff beispielsweise Sperrholz-, Glasfaser- und Edelstahllagen zur Stabilisierung dieser eingesetzt.

Die eigentlichen Tanks bestehen dabei hauptsächlich aus einer sehr dünnen Barriereschicht aus Edelstahl, daher liefert die Isolationsstruktur einen Großteil der benötigten Stabilität. Somit weist der meist eingesetzte Polyurethanhartschaumstoff eine recht hohe Dichte auf. Weiter enthält dieser vorzugsweise Verstärkungsmittel, meist Glasfasermatten (CSM's - continuous strand mats), wodurch die nötigen mechanischen Eigenschaften erhalten werden. Damit die optimale Stabilität gewährt werden kann, ist eine gleichmäßige Verteilung dieser Glasfasermatten über die gesamte Dicke des Schaumstoffs ein wichtiger Parameter.

Solche Isolationskonstruktionen sind beispielsweise in den koreanischen Patentschriften KR 2000010021 und KR 2000010022, den japanischen Patentschriften JP 2003240198 und JP 2001150558, den US-Patentschriften US 20050115248, US 3319431 und US 3341050, der europäischen Anmeldung EP 1698649 und der internationalen Anmeldung WO 2008083996 beschrieben.

Bei Hartschäumen, die großen Temperaturunterschieden und Temperatursprüngen ausgesetzt sind, treten Scherkräfte innerhalb des Schaumkörpers auf. Weil der Polyurethanschaumstoff thermisch isoliert, tritt ein Temperaturgradient im Schaumkörper auf und damit auch ein Schrumpf-/Ausdehnungsgradient, was wiederum zu Scherkräften innerhalb des Schaumkörpers führt. Scherfestigkeit ist auch eine wichtige Eigenschaft für Hartschäume die Querbelastungen ausgesetzt sind, wie z.B. auf Schiffen mit flüssiger Ladung. Aus diesem Grund müssen Polyurethanhartschaumstoffe, die zur Isolation von Tanks für flüssiges Erdgas eingesetzt werden, neben guten mechanischen Eigenschaften, wie Druckfestigkeit und Druck-Elastizitätsmodul (Young Modul) eine besonders hohe Scherfestigkeit aufweisen.

Als Treibmittel werden meist halogenierte Treibmittel, wie Fluorchlorkohlenwasserstoffe und Fluorkohlenwasserstoffe eingesetzt, da so Schaumstoffe mit einer besonders geringen Wärmeleitfähigkeit erhalten werden. Allerdings sind Fluorchlorkohlenwasserstoffe verantwortlich für den Abbau der Ozonschicht und sowohl Fluorchlorkohlenwasserstoffe als auch Fluorkohlenwasserstoffe sind Gase, die mit zur globalen Erwärmung beitragen. Daher muss nach Alternativen gesucht werden.

Treibmittel, wie Kohlenwasserstoffe, beispielsweise Pentan, sind aufgrund ihrer Entflammbarkeit nicht sonderlich geeignet.

Ersetzt man physikalische Treibmittel, wie Fluorkohlenwasserstoffe, durch chemische Treibmittel, wie Wasser, werden im fertigen Schaum vermehrt Harnstoffgruppen gebildet, wodurch der Schaum insbesondere bei tiefen Temperaturen spröder wird und die Scherfestigkeit abnimmt.

Aufgabe der vorliegenden Erfindung war es, einen harten Polyurethanschaumstoff zu liefern, der zur Isolation von Flüssigerdgastanks an Bord von Schiffen geeignet ist, wobei die als Treibmittel eingesetzten Fluorchlorkohlenwasserstoffe oder Fluorkohlenwasserstoffe ganz oder teilweise durch alternative Treibmittel ersetzt sind und der sehr gute mechanische Eigenschaften, wie Druckfestigkeit, Druck-Elastizitätsmodul und Scherfestigkeit sowie eine geringe Wärmeleitfähigkeit aufweist.

Diese Aufgabe wurde gelöst durch einen harten Polyurethanschaumstoff, erhältlich durch Vermischen von (a) Isocyanaten, (b) Verbindungen mit gegenüber Isocyanaten reaktiven Gruppen, (c) Treibmittel, enthaltend Wasser, (d) Katalysatoren und gegebenenfalls (e) weiteren Additiven zu einer Reaktionsmischung, Auftragen der Reaktionsmischung auf ein Verstärkungsmittel und Aushärten der Reaktionsmischung, wobei die Isocyanate (a) eine Viskosität von maximal 500 mPas bei 25 °C aufweisen und die Verbindungen mit gegenüber Isocyanaten reaktiven Gruppen (b) ein Polyetherol (b1) mit einer Funktionalität von 4 oder größer und einer Viskosität bei 25 °C von 10000 mPas oder kleiner, ein Polyetherol (b2) mit einer Funktionalität von 3,5 oder kleiner und einer Viskosität bei 25°C von 600 mPas oder kleiner, ein Polyesterol (b3) mit einer Viskosität bei 25 °C von 2000 mPas oder kleiner, Kettenverlängerer (b4), enthaltend mindestens 30% sekundäre OH-Gruppen, und gegebenenfalls einen Vernetzer (b5) enthalten.

Als Isocyanate (a) können alle gewöhnlichen aliphatischen, cycloaliphatischen und bevorzugt aromatische Di- und/oder Polyisocyanate verwendet werden, die eine Viskosität von weniger als 600mPas, bevorzugt von weniger als 500 mPas und besonders bevorzugt weniger als 350 mPas, gemessen bei 25 °C, aufweisen. Besonders bevorzugt werden als Isocyanate Toluoldiisocyanat (TDI) und Diphenylmethandiisocyanat (MDI) und insbesondere Mischungen aus Diphenylmethandiisocyanat und polymerem Diphenylmethandiisocyanat (PMDI). Diese besonders bevorzugten Isocyanate können ganz oder teilweise mit Uretdion-, Carbamat-, Isocyanurat-, Carbodiimid-, Allophanat- und bevorzugt Urethangruppen modifiziert sein.

Weiterhin können als Isocyanatkomponente Prepolymere sowie Mischungen aus den oben beschriebenen Isocyanaten und Prepolymeren eingesetzt werden. Diese Prepolymere werden aus den oben beschriebenen Isocyanaten sowie den weiter unten beschriebenen Polyethern, Polyestern oder beiden hergestellt und weisen einen NCO-Gehalt von 14 bis 32 Gew.-%, bevorzugt 22 bis 30 Gew.-%, auf.

Als Verbindungen mit gegenüber Isocyanaten reaktiven Gruppen (b) können alle Verbindungen eingesetzt werden, die zumindest zwei gegenüber Isocyanaten reaktive Gruppen, wie OH-, SH-, NH- und CH-acide Gruppen aufweisen. Gewöhnlich werden Polyetherole und/oder Polyesterole mit 2 bis 8 mit Isocyanat reaktiven Wasserstoffatomen eingesetzt. Die OH-Zahl dieser Verbindungen liegt üblicherweise im Bereich von 30 bis 850 mg KOH /g, vorzugsweise im Bereich von 80 und 600 mg KOH/g.

Die Polyetherole werden nach bekannten Verfahren, beispielsweise durch anionische Polymerisation von Alkylenoxiden unter Zusatz mindestens eines Startermoleküls, das 2 bis 8, vorzugsweise 2 bis 6 reaktive Wasserstoffatome gebunden enthält, in Gegenwart von Katalysatoren erhalten. Als Katalysatoren können Alkalihydroxide, wie Natrium- oder Kaliumhydroxid oder Alkalialkoholate, wie Natriummethylat, Natrium- oder Kaliumethylat oder Kaliumisopropylat, oder bei kationischer Polymerisation LewisSäuren, wie Antimonpentachlorid, Bortrifluorid-Etherat oder Bleicherde als Katalysatoren eingesetzt werden. Weiter können als Katalysatoren auch Doppelmetallcyanidverbindungen, sogenannte DMC-Katalysatoren, eingesetzt werden.

Vorzugsweise werden als Alkylenoxide eine oder mehrere Verbindungen mit 2 bis 4 Kohlenstoffatomen im Alkylenrest, wie Tetrahydrofuran, 1,3-Propylenoxid, 1,2- bzw. 2,3-Butylenoxid, jeweils alleine oder in Form von Mischungen, und vorzugsweise Ethylenoxid und/oder 1,2-Propylenoxid eingesetzt.

Als Startermoleküle kommen beispielsweise Ethylenglycol, Diethylenglycol, Glycerin, Trimethylolpropan, Pentaerythrit, Zuckerderivate, wie Saccharose, Hexitderivate, wie Sorbit, Methylamin, Ethylamin, Isopropylamin, Butylamin, Benzylamin, Anilin, Toluidin, Toluoldiamin, Naphtylamin, Ethylendiamin, Diethylentriamin, 4,4'-Methylendianilin, 1,3,-Propandiamin, 1,6-Hexandiamin, Ethanolamin, Diethanolamin, Triethanolamin sowie andere zwei oder mehrwertige Alkohole oder ein oder mehrwertige Amine in Betracht.

Die eingesetzten Polyesteralkohole werden zumeist durch Kondensation von mehrfunktionellen Alkoholen mit 2 bis 12 Kohlenstoffatomen, wie Ethylenglycol, Diethylenglycol, Butandiol, Trimethylolpropan, Glycerin oder Pentaerythrit, mit mehrfunktionellen Carbonsäuren mit 2 bis 12 Kohlenstoffatomen, beispielsweise Bernsteinsäure, Glutarsäure, Adipinsäure, Korksäure, Azelainsäure, Sebacinsäure, Decandicarbonsäure, Maleinsäure, Fumarsäure, Phthalsäure, Isophthalsäure, Terephthalsäure, den Isomeren von Naphthalindicarbonsäuren oder den Anhydriden der genannten Säuren, hergestellt.

Als weitere Ausgangsstoffe bei der Herstellung der Polyester können auch hydrophobe Stoffe mit verwendet werden. Bei den hydrophoben Stoffen handelt es sich um wasserunlösliche Stoffe die einen unpolaren organischen Rest enthalten sowie über mindestens eine reaktive Gruppe, ausgewählt aus Hydroxyl, Carbonsäure, Carbonsäurester oder Mischungen daraus, verfügen. Das Äquivalentgewicht der hydrophoben Materialen liegt vorzugsweise zwischen 130 und 1000 g/mol. Verwendet werden können zum Beispiel Fettsäuren, wie Stearinsäure, Ölsäure, Palmitinsäure, Laurinsäure oder Linolsäure, sowie Fette und Öle, wie zum Beispiel Rizinusöl, Maisöl, Sonnenblumenöl, Sojabohnenöl, Kokosnussöl, Olivenöl oder Tallöl. Enthalten Polyester hydrophobe Stoffe, beträgt der Anteil der hydrophoben Stoffe am Gesamtmonomergehalt des Polyesteralkohols vorzugsweise 1 bis 30 Mol%, besonders bevorzugt 4 bis 15 Mol%.

Die eingesetzten Polyesterole haben vorzugsweise eine Funktionalität von 1,5 bis 5, besonders bevorzugt 1,8 - 3,5 und insbesondere von 1,9 bis 2,2.

Ferner enthält die Verbindung mit gegenüber Isocyanaten reaktiven Gruppen (b) Kettenverlängerungs- und/oder Vernetzungsmittel. Als Kettenverlängerungs- und/oder Vernetzungsmittel kommen insbesondere zwei- oder dreifunktionelle Amine und Alkohole, insbesondere Diole, Triole oder beide, jeweils mit Molekulargewichten kleiner als 350, vorzugsweise von 60 bis 300, und insbesondere 60 bis 250 zum Einsatz. Dabei spricht man bei zweifunktionellen Verbindungen von Kettenverlängerern und bei trioder höherfunktionellen Verbindungen von Vernetzern. In Betracht kommen beispielsweise aliphatische, cycloaliphatische und/oder aromatische Diole mit 2 bis 14, vorzugsweise 2 bis 10 Kohlenstoffatomen, wie Ethylenglykol, 1,2-, 1,3-Propandiol, 1,2-, 1,3-Pentandiol, 1,10-Decandiol, 1,2-, 1,3-, 1,4-Dihydroxycyclohexan, Di- und Triethylenglykol, Di- und Tripropylenglykol, 1,4-Butandiol, 1,6-Hexandiol und Bis-(2-hydroxyethyl)-hydrochinon, Triole, wie 1,2,4-, 1,3,5-Trihydroxy-cyclohexan, Glycerin und Trimethylolpropan, und niedermolekulare hydroxylgruppenhaltige Polyalkylenoxide auf Basis Ethylen- und/oder 1,2-Propylenoxid und den vorgenannten Diolen und/oder Triolen als Startermoleküle.

Dabei ist es erfindungswesentlich, dass die Verbindungen mit gegenüber Isocyanaten reaktiven Gruppen (b) ein Polyetherol (b1) mit einer Funktionalität von 4 oder größer und einer Viskosität bei 25 °C von 10000 mPas oder kleiner, ein Polyetherol (b2) mit einer Funktionalität von 3,5 oder kleiner, bevorzugt 3 oder kleiner und einer Viskosität bei 25°C von 600 mPas oder kleiner, bevorzugt 500 mPas oder kleiner, ein Polyesterol (b3) mit einer Viskosität bei 25 °C von 2000 mPas oder kleiner, einen Kettenverlängerer (b4) und gegebenenfalls einen Vernetzer (b5) enthalten. Als Komponenten (b1) bis (b5) können dabei jeweils einzelne Verbindungen oder Mischungen eingesetzt werden, wobei jede der eingesetzten Verbindungen unter die Definition von (b1) bis (b5) fällt.

Der Kettenverlängerer (b4) weist im Mittel mindestens 30 %, vorzugsweise mindestens 40, besonders bevorzugt mindestens 50 und insbesondere mindestens 60% sekundäre OH-Gruppen auf. Dabei kann es sich bei dem Kettenverlängerer (b4) um Einzelverbindungen oder Mischungen handeln. Der Kettenverlängerer (b4) enthält vorzugsweise Dipropylenglycol, Tripropylenglycol und/oder 2,3-Butandiol alleine oder gegebenenfalls in Mischungen untereinander oder mit weiteren Kettenverlängerern. So wird in einer besonders bevorzugten Ausführungsform Dipropylenglycol zusammen mit einem zweiten Kettenverlängerer, beispielsweise 2,3-Butandiol, Monopropylenglycol oder Diethylenglycol, als Kettenverlängerer (b4) eingesetzt.

In einer weiteren Ausführungsform enthalten die Verbindungen mit gegenüber Isocyanaten reaktiven Gruppen (b) neben dem Polyetherol (b1), dem Polyetherol (b2), den Polyesterol (b3) und dem Kettenverlängerer (b4) ein Vernetzungsmittel (b5). Als Vernetzungsmittel wird vorzugsweise 1,2,4-, 1,3,5-Trihydroxy-cyclohexan, Glycerin und/oder Trimethylolpropan, eingesetzt. Vorzugsweise wird als Vernetzungsmittel Glycerin eingesetzt.

Der Anteil der Komponente (b1) beträgt dabei vorzugsweise 25 bis 70 Gew.-%, besonders bevorzugt 25 bis 55 Gew.-% und insbesondere 30 bis 50 Gew.-%, bezogen auf das Gesamtgewicht der Komponente (b).

Der Anteil der Komponente (b2) beträgt dabei vorzugsweise 10 bis 40 Gew.-%, besonders bevorzugt 15 bis 35 Gew.-%, bezogen auf das Gesamtgewicht der Komponente (b).

Der Anteil der Komponente (b3) beträgt dabei vorzugsweise 15 bis 50 Gew.-%, besonders bevorzugt 20 bis 40 Gew.-%, bezogen auf das Gesamtgewicht der Komponente (b).

Der Anteil von Kettenverlängerer (b4) am der Komponente (b) beträgt vorzugsweise von 1 bis 30 Gew.-%, besonders bevorzugt von 5 bis 20 Gew.-%, bezogen auf das Gesamtgewicht der Komponente (b).

Der Anteil der Komponente (b5) an der Komponente (b) beträgt vorzugsweise 0 bis 10 Gew.-%, besonders bevorzugt 1 bis 5 Gew.-%, bezogen auf das Gesamtgewicht der Komponente (b).

Der Anteil der Polyetherole (b1), (b2), (b3), (b4) und gegebenenfalls (b5) an der Verbindung mit gegenüber Isocyanaten reaktiven Gruppen (b) beträgt vorzugsweise zumindest 80 Gew.-%, besonders bevorzugt zumindest 90 Gew.-% und insbesondere 100 Gew.-%, bezogen auf das Gesamtgewicht der Verbindung mit gegenüber Isocyanaten reaktiven Gruppen (b).

Vorzugsweise ist die Gesamtfunktionalität der Komponente (b) größer als 2,5, besonders bevorzugt größer als 2,6 und insbesondere größer als 2,75. Die mittlere OH-Zahl der Komponente (b) ist vorzugsweise größer als 300 mg KOH/g, besonders bevorzugt zwischen 320 und 1000 mg KOH/g und insbesondere zwischen 340 und 600 mg KOH/g.

Werden als Isocyanate (a) Isocyanatprepolymere eingesetzt, wird der Gehalt an Verbindungen mit gegenüber Isocyanaten reaktiven Gruppen (b), inklusive den zur Herstellung der Isocyanatprepolymere eingesetzten Verbindungen mit gegenüber Isocyanaten reaktiven Gruppen (b) berechnet.

Als Treibmittel (c) wird Treibmittel, enthaltend Wasser, eingesetzt. Dabei kann Wasser alleine oder in Kombination mit weiteren Treibmitteln eingesetzt werden. Der Gehalt an Wasser im Treibmittel (c) ist vorzugsweise größer als 40 Gew.-%, besonders bevorzugt größer als 60 Gew.-% und ganz besonders bevorzugt größer als 80 Gew.-%, bezogen auf das Gesamtgewicht des Treibmittels (c). Insbesondere wird Wasser als alleiniges Treibmittel eingesetzt. Werden neben Wasser weitere Treibmittel eingesetzt, können beispielsweise Fluorchlorkohlenwasserstoffe, Fluorkohlenwasserstoffe, Kohlenwasserstoffe, Säuren und flüssiges bzw. gelöstes Kohlendioxid verwendet werden. Vorzugsweise enthalten Treibmittel (c) weniger als 50 Gew.-%, mehr bevorzugt weniger als 20 Gew.-%, besonders bevorzugt weniger als 10 Gew.-% und insbesondere 0 Gew.%, bezogen auf das Gesamtgewicht des Treibmittels (c), Fluorchlorkohlenwasserstoffe, Fluorkohlenwasserstoffe und/oder Kohlenwasserstoffe. In einer weiteren Ausführungsform kann als Treibmittel (c) eine Mischung aus Wasser und Ameisensäure und/oder Kohlendioxid eingesetzt werden. Um das Treibmittel einfacher in der Polyolkomponente dispergieren zu können, kann das Treibmittel (c) mit polaren Verbindungen, wie Dipropylenglycol, vermischt sein.

Die Treibmittel (c) werden in einer solchen Menge eingesetzt, dass die Dichte des harten Polyurethanschaumstoffs, der durch Reaktion der Komponenten (a) bis (e) entsteht, ohne Berücksichtigung des Verstärkungsmittels, im Bereich von 50 - 200, vorzugsweise 80 - 120 g/L liegt.

Als Katalysatoren (d) können alle Verbindungen eingesetzt werden, die die Isocyanat-Wasser-Reaktion oder die Isocyanat-Polyol-Reaktion beschleunigen. Solche Verbindungen sind bekannt und beispielsweise im "Kunststoffhandbuch, Band 7, Polyurethane", Carl Hanser Verlag, 3. Auflage 1993, Kapitel 3.4.1 beschrieben. Diese umfassen aminbasierte Katalysatoren und Katalysatoren auf Basis von organischen Metallverbindungen.

Als Katalysatoren auf Basis von organischen Metallverbindungen können beispielsweise organische Zinnverbindungen, wie Zinn-(II)-salze von organischen Carbonsäuren, wie Zinn-(II)-acetat, Zinn-(II)-octoat, Zinn-(II)-ethyl-hexoat und Zinn-(II)-laurat und die Dialkylzinn-(IV)-salze von organischen Carbonsäuren, wie Dibutyl-zinndiacetat, Dibutylzinndilaurat, Dibutylzinn-maleat und Dioctylzinn-diacetat, sowie Bismutcarboxylate wie Bismut(III)-neodecanoat, Bismut-2-ethylhexanoat und Bismut-octanoat oder Alkalisalze von Carbonsäuren, wie Kaliumacetat oder Kaliumformiat eingesetzt werden.

Vorzugsweise wird als Katalysator (d) eine Mischung, enthaltend zumindest ein tertiäres Amin, eingesetzt. Bei diesen tertiären Aminen handelt es sich gewöhnlich um Verbindungen, die auch gegenüber Isocyanat reaktive Gruppen, wie OH-, NH- oder NH₂-Gruppen, tragen können. Einige der am häufigsten eingesetzten Katalysatoren sind Bis(2-Dimethyl-aminoethyl)ether, N,N,N,N,N-Pentamethyldiethylentriamin, N,N,N-Triethylamino-ethoxyethanol, Dimethylcyclohexylamin, Dimethylbenzylamin, Triethylamin, Triethylendiamin, Pentamethyldipropylentriamin, Dimethylethanolamin, N-Methylimidazol, N-Ethylimidazol, Tetramethylhexamethylendiamin, Tris-(Dimethylaminopropyl)hexahydrotriazin, Dimethylaminopropylamin, N-Ethylmorpholin, Diazabicycloundecen und Diazabicyclononen. Vorzugsweise werden als Katalysatoren (d) Mischungen eingesetzt, die zumindest zwei unterschiedliche tertiäre Amine enthalten. Besonders bevorzugt enthält die Katalysatormischung (d) Dimethylcyclohexylamin (d1) und ein bicyclisches Amin (d2) oder Dimethylcyclohexylamin (d1) und ein monocyclisches Amin (d3). Dabei beträgt das Verhältnis von Dimethylcyclohexylamin (d1) und bicyclischem Amin (d2) oder Dimethylcyclohexylamin (d1) und monocyclischen Amin (d3) vorzugsweise 0,2 bis 4 zu 1, besonders bevorzugt 0,5 bis 1,5 zu 1. Vorzugsweise sind die cyclischen Amine d2) und d3) aus den oben angegebenen cyclischen Aminen ausgewählt.

Der Anteil von Dimethylcyclohexylamin (d1), bicyclischen Amin (d2) und monocyclischen Amin (d3) an der Katalysatormischung (d) beträgt vorzugsweise zumindest 80 Gew.-%, besonders bevorzugt zumindest 90 Gew.-% und insbesondere 100 Gew.-%, bezogen auf das Gesamtgewicht der Katalysatoren (d).

Als Verstärkungsmittel können alle Materialien eingesetzt werden, die dem harten Polyurethanschaumstoff eine noch höhere mechanische Stabilität verleihen. Solche Verstärkungsmittel sind beispielsweise Glasfasern, Glasfasermatten oder Kohlefasermatten, bevorzugt Glasfasermatten, beispielsweise Unifilio® U801 oder U809 der Firma Owens Corning Vetrotex. Der Anteil des Verstärkungsmittels beträgt vorzugsweise 5 bis 15 Gewichtsprozent, bezogen auf das Gesamtgewicht des harten Polyurethanschaumstoffs einschließlich Verstärkungsmittel.

Als weitere Additive (e) können Flammschutzmittel, Weichmacher, Schaumstabilisatoren, weitere Füllstoffe und sonstige Zusatzstoffe, wie Antioxidantien eingesetzt werden. Vorzugsweise werden zumindest Flammschutzmittel oder Weichmacher eingesetzt.

Als Flammschutzmittel können im allgemeinen die aus dem Stand der Technik bekannten Flammschutzmittel verwendet werden. Geeignete Flammschutzmittel sind beispielsweise bromierte Ether (Ixol B 251), bromierte Alkohole, wie Dibromneopentylakohol, Tribromneopentylalkohol und PHT-4-Diol, sowie chlorierte Phosphate, wie z.B. Tris-(2-chlorethyl)phosphat, Tris-(2-chlorisopropyl)phosphat (TCPP), Tris(1,3-dichlorisopropyl)phosphat, Tris-(2,3-dibrompropyl)phosphat und Tetrakis-(2-chlorethyl)-ethylendiphosphat, oder Mischungen daraus.

Außer den bereits genannten halogensubstituierten Phosphaten können auch anorganische Flammschutzmittel, wie roter Phosphor, roten Phosphor enthaltende Zurichtungen, expandierbarer Graphit (Blähgraphit), Aluminiumoxidhydrat, Antimontrioxid, Arsenoxid, Ammoniumpolyphosphat und Calciumsulfat oder Cyanursäurederivate, wie Melamin, oder Mischungen aus mindestens zwei Flammschutzmitteln, wie Ammoniumpolyphosphaten und Melamin sowie gegebenenfalls Stärke, zum Flammfestmachen der erfindungsgemäß hergestellten Polyurethan-Hartschaumstoffe verwendet werden.

Als weitere flüssige halogenfreie Flammschutzmittel können Diethyl-ethanphosphonat (DEEP), Triethylphosphat (TEP), Dimethylpropylphosphonat (DMPP), Diphenylkresylphosphat (DPK) und andere verwendet werden.

Die Flammschutzmittel werden im Rahmen der vorliegenden Erfindung bevorzugt in einer Menge von 0 bis 25% bezogen auf das Gesamtgewicht der Komponenten (b) bis (e) verwendet.

Als Weichmacher seien beispielsweise Ester von mehrwertigen, vorzugsweise zweiwertigen Carbonsäuren mit einwertigen Alkoholen genannt. Die Säurekomponente solcher Ester kann sich z.B. herleiten von Bemsteinsäure, Isophpthalsäure, Terephthalsäure, Trimellitsäure, Zitronensäure, Phthalsäureanhydrid, Tetra- und/oder Hexahydrophthalsäureanhydrid, Endomethylen-tetrahydrophthalsäureanhydrid, Glutarsäureanhydrid, Maleinsäureanhydrid, Fumarsäure und/oder dimeren und/oder trimeren Fettsäuren wie Ölsäure, gegebenenfalls in Mischung mit monomeren Fettsäuren. Die Alkoholkomponente solcher Ester kann sich z.B. herleiten von verzweigten und/oder unverzweigten aliphatischen Alkoholen mit 1 bis 20 C-Atomen, wie Methanol, Ethanol, Propanol, Isopropanol, n-Butanol, sek.-Butanol, tert.-Butanol, den verschiedenen Isomeren des Pentylalkohols, Hexylalkohols, Octylalkohols (z.B. 2-Ethyl-Hexanol), Nonylalkohols, Decylalkohols, Laurylalkohols, Myristylalkohols, Cetylalkohols, Stearylalkohols und/oder von natürlich vorkommenden oder durch Hydrierung natürlich vorkommender Carbonsäuren erhältlichen Fett- und Wachsalkoholen. Als Alkoholkomponente kommen auch cycloaliphatische und/oder aromatische Hydroxyverbindungen infrage, beispielsweise Cyclohexanol und dessen Homologe, Phenol, Kresol, Thymol, Carvacrol, Benzylalkohol und/oder Phenylethanol. Als Weichmacher können auch Ester von einwertigen Carbonsäuren mit zweiwertigen Alkoholen verwendet werden, wie Texanolesteralkohole, beispielsweise 2,2,4-Trimethyl-1,3-pentandiol diisobutyrat (TXIB) oder 2,2,4-Trimethyl-1,3-pentandiol dibenzoat; Diester aus Oligoalkylenglykolen und Alkylcarbonsäuren, beispielsweise Triethylenglykol-dihexanoat oder Tetraethylenglykol-diheptanoat und analoge Verbindungen.

Als Weichmacher kommen außerdem Ester der obengenannten Alkohole mit Phosphorsäure in Frage. Gegebenenfalls können auch Phosphorsäureester aus halogenierten Alkoholen, wie z.B. Trichlorethylphosphat, eingesetzt werden. Im letzteren Fall kann gleichzeitig mit dem Weichmacher-Effekt ein flammhemmender Effekt erzielt werden. Selbstverständlich können auch gemischte Ester der obengenannten Alkohole und Carbonsäuren eingesetzt werden.

Bei den Weichmachern kann es sich auch um sogenannte polymere Weichmacher handeln, z.B. um Polyester der Adipin-, Sebacin- und/oder Phthalsäure.

Weiter sind auch Alkylsulfonsäureester des Phenols, z.B. Paraffinsulfonsäurephenylester, und aromatische Sulfonamide, z.B. Ethylltoluolsulfonamid, als Weichmacher verwendbar. Auch Polyether, beispielsweise Triethylenglykoldimethylether sind als Weichmacher verwendbar.

Vorzugsweise wird der Weichmacher in einer Menge von 0,1 bis 15, besonders bevorzugt von 0,5 bis 10 Gew.-%, bezogen auf das Gesamtgewicht der Komponenten b) bis e) eingesetzt. Durch den Zusatz von Weichmacher können dabei die mechanischen Eigenschaften des harten Polyurethanschaumstoffs, insbesondere bei tiefen Temperaturen weiter verbessert werden.

Als Schaumstabilisatoren werden Stoffe bezeichnet, welche die Ausbildung einer regelmäßigen Zellstruktur bei der Schaumbildung fördern. Beispielsweise sind genannt: Siliconhaltige Schaumstabilisatoren, wie Siloxan-Oxalkylen-Mischpolymerisate und andere Organopolysiloxane. Ferner Alkoxylierungsprodukte von Fettalkoholen, Oxoalkoholen, Fettaminen, Alkylphenolen, Dialkylphenolen, Alkylkresolen, Alkylresorcin, Naphtol, Alkylnaphtol, Naphtylamin, Anilin, Alkylanilin, Toluidin, Bisphenol A, alkyliertem Bisphenol A, Polyvinylalkohol, sowie weiterhin Alkoxylierungsprodukte von Kondensationsprodukten aus Formaldehyd und Alkylphenolen, Formaldehyd und Dialkylphenolen, Formaldehyd und Alkylkresolen, Formaldehyd und Alkylresorcin, Formaldehyd und Anilin, Formaldehyd und Toluidin, Formaldehyd und Naphtol, Formaldehyd und Alkylnaphtol sowie Formaldehyd und Bisphenol A oder Mischungen aus zwei oder mehreren dieser Schaumstabilisatoren.

Schaumstabilisatoren werden bevorzugt in einer Menge von 0,5 bis 4, besonders bevorzugt 1 bis 3 Gew.-%, bezogen auf das Gesamtgewicht der Komponenten (b) bis (e), verwendet.

Als weitere Füllstoffe, insbesondere verstärkend wirkende Füllstoffe, sind die an sich bekannten, üblichen organischen und anorganischen Füllstoffe, Verstärkungsmittel usw. zu verstehen. Im einzelnen seien beispielhaft genannt: anorganische Füllstoffe wie silikatische Mineralien, beispielsweise Schichtsilikate wie Antigorit, Serpentin, Hornblenden, Amphibole, Chrisotil, Talkum; Metalloxide, wie Kaolin, Aluminiumoxide, Titanoxide und Eisenoxide, Metallsalze wie Kreide, Schwerspat und anorganische Pigmente, wie Cadmiumsulfid, Zinksulfid sowie Glas und andere. Vorzugsweise verwendet werden Kaolin (China Clay), Aluminiumsilikat und Copräzipitate aus Bariumsulfat und Aluminiumsilikat sowie natürliche und synthetische faserförmige Mineralien wie Wollastonit, Metall- und insbesondere Glasfasern verschiedener Länge, die gegebenenfalls geschlichtet sein können. Verwendet werden können auch Glasmikrohohlkugeln. Als organische Füllstoffe kommen beispielsweise in Betracht: Kohle, Melamin, Kollophonium, Cyclopentadienylharze und Pfropfpolymerisate sowie Cellulosefasern, Polyamid-, Polyacrylnitril-, Polyurethan-, Polyesterfasern auf der Grundlage von aromatischen und/oder aliphatischen Dicarbonsäureestern und insbesondere Kohlenstofffasern.

Die anorganischen und organischen Füllstoffe können einzeln oder als Gemische verwendet werden und werden der Reaktionsmischung vorteilhafterweise in Mengen von 0,5 bis 30 Gew.%, vorzugsweise 1 bis 15 Gew.%, bezogen auf das Gewicht der Komponenten (a) bis (e), einverleibt.

Ein weiterer Gegenstand der Erfindung ist ein Isoliermaterial für Flüssigerdgastanks, insbesondere für Flüssigerdgastanks an Bord von Schiffen, enthaltend einen erfindungsgemäßen Polyurethanhartschaumstoff.

Vorzugsweise erfolgt die Herstellung des erfindungsgemäßen harten Polyurethanschaumstoffs kontinuierlich auf einem Band. Dazu werden vorzugsweise die Komponenten (b) bis (d) und gegebenenfalls (e) zu einer Polyolkomponente vermischt. Diese werden anschließend vorzugsweise in einer Niederdruckmischvorrichtung, einer Hochdruckmischvorrichtung bei vermindertem Druck von kleiner 100 bar oder einer Hochdruckmaschine mit der Isocyanat-Komponente (a) vermischt. Alternativ können auch die Komponenten (a) bis (d) und gegebenenfalls (e) jeweils einzeln in die Mischvorrichtung gegeben werden. Anschließend wird die so erhaltene Reaktionsmischung auf das Verstärkungsmittel, vorzugsweise auf die Glasfasermatten gegeben, die vorzugsweise von mehreren Trommeln (beispielweise 4-10, bevorzugt 5, 6 oder 7) kontinuierlich auf das Band abgerollt werden und dort eine entsprechende Anzahl an Lagen bilden. Anschließend wird der erhaltene Schaum vorzugsweise auf dem Band soweit ausgehärtet, dass dieser ohne Beschädigung in Stücke geschnitten werden kann. Dies kann bei erhöhten Temperaturen, beispielsweise beim Durchlauf durch einen Ofen, erfolgen. Die erhaltenen Schaumstücke werden dann vorzugsweise weiter gelagert, um die volle mechanische Belastbarkeit zu erhalten.

Anschließend wird der erhaltene Polyurethanhartschaumstoff zum Isolationspaneel weiterverarbeitet. Dazu werden die erhaltenen Stücke des erfindungsgemäßen harten Polyurethanschaumstoffs auf Maß geschnitten und vorzugsweise zusammen mit Sperrholzplatten und harzgetränkten Glasfasermatten verklebt. Diese Polyurethanschaumstoffelemente werden dann mit weiteren Hilfsmitteln, wie Eisenplatten, Schrauben und Fäden ausgestattet, um die fertigen Isolationselemente herzustellen, die dann direkt bei der Herstellung der Isolationsbarriere des Flüssigerdgastanks eingesetzt werden. Eine detaillierte Beschreibung der Herstellung solcher Isolationspaneele ist beispielsweise auf der Homepage der Firmen Finetec und Kangrim (Korea) zu finden.

Isocyanate (a) und Verbindungen mit gegenüber Isocyanat reaktiven Gruppen (b), Treibmittel, enthaltend Wasser (c), Katalysatoren (d) und gegebenenfalls weitere Additive (e) werden vorzugsweise in solchen Mengen zur Umsetzung gebracht, dass der Isocyanatindex im Bereich von 100 bis 400, bevorzugt 100 - 200, besonders bevorzugt 100 - 150 liegt.

Dabei wird unter Isocyanatindex im Rahmen der vorliegenden Erfindung das stöchiometrische Verhältnis von Isocyanatgruppen zu mit Isocyanat reaktiven Gruppen, multipliziert mit 100, verstanden. Unter mit Isocyanat reaktiven Gruppen werden dabei alle in der Reaktionsmischung enthaltenen, mit Isocyanat reaktiven Gruppen, einschließlich chemischer Treibmittel, verstanden, nicht aber die Isocyanatgruppe selbst.

Besonders vorteilhaft ist, dass die erfindungsgemäßen Reaktionsmischungen schnell in die Verstärkungsmittel eindringen und dadurch eine gleichmäßige Verteilung der Verstärkungsmittel im erhaltenen Polyurethanhartschaumstoff begünstigt wird. Ebenfalls vorteilhaft ist die lange Startzeit der erfindungsgemäßen Reaktionsmischungen bei kurzer Reaktionszeit.

Erfindungsgemäße harte Polyurethanschaumstoffe werden vorzugsweise zu Isolationszwecken eingesetzt. Besonders bevorzugt werden erfindungsgemäße, harte Polyurethanschaumstoffe zur Isolation von Flüssigerdgastanks, insbesondere an Bord von Schiffen (LNG-carrier), eingesetzt. Diese sind mechanisch stabil, weisen eine geringe Wärmeleitfähigkeit auf, zeigen hervorragende Schaumeigenschaften, beispielsweise ohne Löcher und Risse, haben gute mechanische Eigenschaften, wie Scherfestigkeiten, Druckfestigkeiten und einen hervorragenden Young-Modul, alles auch bei tiefen Temperaturen, und weisen eine gleichmäßige Verteilung der Schichten von Verstärkungsmitteln auf. Insbesondere Mischungen von erfindungsgemäßen Kettenverlängerern (b4) führen zu deutlich verbesserten Scherfestigkeiten. Dabei werden die Druckfestigkeit und der Youngmodul sowohl senkrecht als auch parallel zur Schäumrichtung (in x/y- und z-Richtung) gemäß DIN 53421 / DIN EN ISO 604 gemessen. Die Scherfestigkeit wird an Probekörpern von 170 mm x 35 mm x 17 mm gemäß DIN 53427 bei 25 °C oder -80 °C und einer Zuggeschwindigkeit vom 1 mm / Minute senkrecht zur Schäumrichtung (in x/y-Richtung) bestimmt.

Anhand der folgenden Beispiele sollen die Vorteile der Erfindung verdeutlicht werden.

### Beispiele

Zur Herstellung der erfindungsgemäßen Polyurethanhartschaumstoffe gemäß Beispiel 1 bis 6 sowie der Vergleichsbeispiele V1 bis V4 wurden die verwendeten Polyole gemäß Tabelle 1 mit Katalysatoren, Stabilisator und Treibmittel verrührt, anschließend mit dem Isocyanat vermischt und zum Polyurethanhartschaumstoff verschäumt. Dabei war die Abbindezeit mittels Anpassung der Katalysatormenge jeweils auf 540 Sekunden eingestellt. Durch das Treibmittel wurde eine konstante Schaumrohdichte von 100 g/L eingestellt. Der Isocyanatindex betrug jeweils 120. Die Beispiele sollen den Effekt der erfindungsgemäßen Polyolmischung auf die Eigenschaften des Schaums verdeutlichen und wurden aus praktischen Gründen ohne Verstärkungsmittel hergestellt.

In einer Form wurden Polyurethanhartschaumstoffe der Dimension 225 mm x 225 mm x 225 mm hergestellt. Nach dem Aushärten wurden die Prüfkörper zur Bestimmung der Scherfestigkeit, der Druckfestigkeit sowie des Youngmoduls entsprechend den angegebenen Normen aus diesem Würfel herausgesägt.

Druckfestigkeit und der Youngmodul wurden räumlich gemittelt gemäß DIN 53421 / DIN EN ISO 604 gemessen. Die Scherfestigkeit wurde an Probekörpern von 170 mm x 35 mm x 17 mm gemäß DIN 53427 bei 25 °C oder -80 °C und einer Zuggeschwindigkeit vom 1 mm / Minute senkrecht zur Schäumrichtung (in x/y-Richtung) bestimmt.

Die Zusammensetzung der Reaktionsmischung zur Herstellung der harten Polyurethanschäume gemäß Beispiel 1 bis 6 sowie den Vergleichsbeispielen V1 bis V4 und deren mechanische Eigenschaften sind in der Tabelle 1 angegeben.

**Tabelle 1**

| Beispiel | 1 | 2 | 3 | 4 | 5 | 6 | V1 | V2 | V3 | V4 |
|---|---|---|---|---|---|---|---|---|---|---|
| Polyol 1 | 40 | 50 | 50 | 40 | 35 | 33 | 50 | 50 | 50 | 40 |
| Polyol 2 | 25 | 15 | 25 | 25 | 25 | 25 | 25 | 50 | 40 | 25 |
| Polyol 3 | 25 | 25 | 15 | 25 | 25 | 25 | 25 | | | 25 |
| Dipropylenglycol | 10 | 10 | 10 | | 7,5 | 7,5 | | | 10 | |
| 2,3-Butandiol | | | | 10 | 7,5 | 7,5 | | | | |
| Diethylenglycol | | | | | | | | | | 10 |
| Treibmittel | 1,0 | 1,0 | 1,1 | 1,2 | 1,1 | 1,0 | 1,0 | 1,1 | 1,4 | 1,1 |
| Katalysator | 0,8 | 0,75 | 0,8 | 1,0 | 0,75 | 0,95 | 0,95 | 1,1 | 0,6 | 0,8 |
| Weichmacher | | | | | | 2 | | | | |
| Stabilisator | 1,5 | 1,5 | 1,5 | 1,5 | 1,5 | 1,5 | 1,5 | 1,5 | 1,5 | 1,5 |
| Isocyanat | 126 | 137 | 133 | 137 | 140 | 136 | 116 | 104 | 130 | 133 |
| | | | | | | | | | | |
| Dichte [g/L] | 100 | 100 | 100 | 100 | 100 | 100 | 100 | 100 | 100 | 100 |
| Scherfestigkeit bei 25 °C [MPa] | 0,83 | 0,84 | 0,85 | 0,78 | 0,84 | 0,85 | 0,79 | 0,71 | 0,69 | 0,70 |
| Scherfestigkeit bei -80 °C [MPa] | 1,06 | | | | | 0,93 | 0,83 | 0,78 | | |
| Druckfestigkeit [N/mm²] | 0,91 | 0,96 | 0,92 | 0,95 | 0,90 | 0,97 | 0,84 | 0,70 | 0,89 | 0,84 |
| Youngmodul [N/mm²] | 24,8 | 24,5 | 23,5 | 24,3 | 23,7 | 25,9 | 22,5 | 18,3 | 25,9 | 22,7 |

| | | | | | | | | | | |
|---|---|---|---|---|---|---|---|---|---|---|
| Dabei wurden folgende Einsatzstoffe verwendet: Polyol 1: zuckerbasiertes, co-initiiertes Polyetherol, Funktionalität = 4,4, OH-Zahl = 500 mg KOH/g Viskosität = 8000 mPas Polyol 2: propylenglycolbasiertes Polyetherol, Funktionalität = 2, OH-Zahl = 100 mg KOH/g, Viskosität = 150 mPas Polyol 3: Phthalsäureanhydrid /Diethylenglycol -basiertes Polyesterol, Funktionalität = 2, OHZ = 300 mg KOH/g, Viskosität = 1000 mPas Isocyanat: polymeres Methylendiphenyldiisocyanat (PMDI), Viskosität = 200 mPas, (Lupranat M 20 S der BASF AG) | | | | | | | | | | |

(die Viskositätsangaben beziehen sich jeweils auf die Viskosität bei 25°C)
Stabilisator: siliconhaltiger Schaumstabilisator
Katalysator: Dimethylcyclohexylamin, 10 Gew.-%ige Lösung in Polyol 2
Treibmittel: Wasser
Weichmacher: Dialkyl-Dicarbonsäureester

Tabelle 1 zeigt, dass erfindungsgemäße harte Polyurethanschaumstoffe hohe Scherfestigkeiten sowie hohe Druckfestigkeiten und einen hohen Young Modul aufweisen.

Der zusätzliche Einsatz von Weichmachern zeigt bei einzelnen Schaumeigenschaften eine weitere Verbesserung.

## Patentansprüche

1. Harter Polyurethanschaumstoff, erhältlich durch Vermischen von
a) Isocyanaten
b) Verbindungen mit gegenüber Isocyanaten reaktiven Gruppen
c) Treibmittel, enthaltend Wasser,
d) Katalysatoren und gegebenenfalls
e) weiteren Additiven,
zu einer Reaktionsmischung, Auftragen der Reaktionsmischung auf ein Verstärkungsmittel und Aushärten der Reaktionsmischung,
wobei die Isocyanate (a) eine Viskosität von maximal 500 mPas bei 25 °C aufweisen und
die Verbindungen mit gegenüber Isocyanaten reaktiven Gruppen (b) ein Polyetherol (b1) mit einer Funktionalität von 4 oder größer und einer Viskosität bei 25 °C von 10000 mPas oder kleiner, ein Polyetherol (b2) mit einer Funktionalität von 3,5 oder kleiner und einer Viskosität bei 25°C von 600 mPas oder kleiner, ein Polyesterol (b3) mit einer Viskosität bei 25 °C von 2000 mPas oder kleiner, Kettenverlängerer (b4), enthaltend mindestens 30% sekundäre OH-Gruppen, und gegebenenfalls einen Vernetzer (b5) enthalten.

2. Harter Polyurethanschaumstoff nach Anspruch 1, **dadurch gekennzeichnet, dass** der Kettenverlängerer (b4) 2,3 Butandiol, Monopropylenglycol, Dipropylenglycol und/oder Tripropylenglycol enthält.

3. Harter Polyurethanschaumstoff nach Anspruch 1 oder 2, **dadurch gekennzeichnet, dass** der Kettenverlängerer (b4) Dipropylenglycol zusammen mit einem zweiten Kettenverlängerer, beispielsweise 2,3-Butandiol oder Diethylenglycol, enthält.

4. Harter Polyurethanschaumstoff nach einem der Ansprüche 1 bis 3, **dadurch gekennzeichnet, dass** der Anteil des Polyetherols (b1) 30 bis 60 Gew.-% und des Kettenverlängerers (b4) 2 bis 30 Gew.-%, jeweils bezogen auf das Gesamtgewicht der Polyolmischung b), beträgt.

5. Harter Polyurethanschaumstoff nach einem der Ansprüche 1 bis 4, **dadurch gekennzeichnet, dass** der Anteil der Polyetherole (b1), (b2), (b3), (b4) und gegebenenfalls (b5) an der Verbindung mit gegenüber Isocyanaten reaktiven Gruppen (b) 100 Gew.-%, bezogen auf das Gesamtgewicht der Verbindung mit gegenüber Isocyanaten reaktiven Gruppen (b), beträgt.

6. Harter Polyurethanschaumstoff nach einem der Ansprüche 1 bis 5, **dadurch gekennzeichnet, dass** die mittlere Dichte des Polyurethanschaumstoffs ohne Verstärkungsmittel im Bereich von 50 - 200g/L liegt.

7. Harter Polyurethanschaumstoff nach einem der Ansprüche 1 bis 5, **dadurch gekennzeichnet, dass** die mittlere Dichte des Polyurethanschaumstoffs ohne Verstärkungsmittel im Bereich von 80 - 120 g/L liegt.

8. Harter Polyurethanschaumstoff nach einem der Ansprüche 1 bis 7, **dadurch gekennzeichnet, dass** Wasser das einzige Treibmittel ist.

9. Harter Polyurethanschaumstoff nach einem der Ansprüche 1 bis 8, **dadurch gekennzeichnet, dass** als Katalysatoren d) eine Katalysatormischung, enthaltend tertiäre Amine, eingesetzt wird.

10. Harter Polyurethanschaumstoff nach einem der Ansprüche 1 bis 9, **dadurch gekennzeichnet, dass** das Verstärkungsmittel Glasfasermatten sind und das Verstärkungsmittel zu 5 bis 15 Gewichtsprozent, bezogen auf das Gesamtgewicht des harten Polyurethanschaumstoffs einschließlich Verstärkungsmittel, eingesetzt wird.

11. Harter Polyurethanschaumstoff nach einem der Ansprüche 1 bis 10, **dadurch gekennzeichnet, dass** die weiteren Additive e) Weichmacher umfassen.

12. Verfahren zur Herstellung eines harten Polyurethanschaumstoffs bei dem man
a) Isocyanate mit
b) Verbindungen mit gegenüber Isocyanaten reaktiven Gruppen,
c) Treibmittel, enthaltend Wasser,
d) einer Katalysatormischung, enthaltend tertiäre Amine, und gegebenenfalls
e) weitere Additive,
zu einer Reaktionsmischung vermischt, auf Verstärkungsmittel aufträgt und zu dem Polyurethanschaumstoff aushärtet, wobei
die Isocyanate (a) eine Viskosität von kleiner 500 mPas bei 25 °C aufweisen und
die Verbindungen mit gegenüber Isocyanaten reaktiven Gruppen (b) ein Polyetherol (b1) mit einer Funktionalität von 4 oder größer und einer Viskosität bei 25 °C von 10000 mPas oder kleiner, ein Polyetherol (b2) mit einer Funktionalität von 3,5 oder kleiner und einer Viskosität bei 25°C von 600 mPas oder kleiner, ein Polyesterol (b3) mit einer Viskosität bei 25 °C von 2000 mPas oder kleiner und Kettenverlängerer (b4), enthaltend mindestens 30% sekundäre OH-Gruppen, und gegebenenfalls einen Vernetzer (b5) enthalten.

13. Isoliermaterial für Flüssigerdgastanks, enthaltend einen Polyurethanhartschaumstoffs nach einem der Ansprüche 1 bis 10.

14. Verwendung eines Polyurethanhartschaumstoffs nach einem der Ansprüche 1 bis 10 zur Isolation von Flüssigerdgastanks, insbesondere auf Schiffen.

## Claims

1. A rigid polyurethane foam which can be obtained by mixing
a) isocyanates,
b) compounds having groups which are reactive toward isocyanates,
c) blowing agents comprising water,
d) catalysts and optionally
e) further additives
to form a reaction mixture, applying the reaction mixture to a reinforcing material and curing the reaction mixture,
wherein the isocyanates (a) have a viscosity of not more than 500 mPas at 25°C and
the compounds (b) having groups which are reactive toward isocyanates comprise a polyetherol (b1) having a functionality of 4 or more and a viscosity at 25°C of 10 000 mPas or less, a polyetherol (b2) having a functionality of 3.5 or less and a viscosity at 25°C of 600 mPas or less, a polyesterol (b3) having a viscosity at 25°C of 2000 mPas or less, chain extenders (b4) comprising at least 30% secondary OH groups and optionally a crosslinker (b5).

2. The rigid polyurethane foam according to claim 1, wherein the chain extender (b4) comprises 2,3-butanediol, monopropylene glycol, dipropylene glycol and/or tripropylene glycol.

3. The rigid polyurethane foam according to claim 1 or 2, wherein the chain extender (b4) comprises dipropylene glycol together with a second chain extender, for example 2,3-butanediol or diethylene glycol.

4. The rigid polyurethane foam according to any of claims 1 to 3, wherein the proportion of the polyetherol (b1) is from 30 to 60% by weight and that of the chain extender (b4) is from 2 to 30% by weight, in each case based on the total weight of the polyol mixture b).

5. The rigid polyurethane foam according to any of claims 1 to 4, wherein the proportion of the polyetherols (b1), (b2), (b3), (b4) and optionally (b5) in the compound (b) having groups which are reactive toward isocyanates is 100% by weight, based on the total weight of the compound (b) having groups which are reactive toward isocyanates.

6. The rigid polyurethane foam according to any of claims 1 to 5, wherein the average density of the polyurethane foam without reinforcing material is in the range 50 - 200 g/l.

7. The rigid polyurethane foam according to any of claims 1 to 5, wherein the average density of the polyurethane foam without reinforcing material is in the range 80 - 120 g/l.

8. The rigid polyurethane foam according to any of claims 1 to 7, wherein water is the sole blowing agent.

9. The rigid polyurethane foam according to any of claims 1 to 8, wherein a catalyst mixture comprising tertiary amines is used as catalysts d).

10. The rigid polyurethane foam according to any of claims 1 to 9, wherein the reinforcing material is glass fiber mats and the reinforcing material is used in an amount of from 5 to 15 per cent by weight, based on the total weight of the rigid polyurethane foam including reinforcing material.

11. The rigid polyurethane foam according to any of claims 1 to 10, wherein the further additives e) comprise plasticizers.

12. A process for producing a rigid polyurethane foam, which comprises mixing
a) isocyanates with
b) compounds having groups which are reactive toward isocyanates,
c) blowing agents comprising water,
d) a catalyst mixture comprising tertiary amines and optionally
e) further additives
to form a reaction mixture, applying the reaction mixture to a reinforcing material and curing the reaction mixture to form the polyurethane foam, wherein
the isocyanates (a) have a viscosity of not more than 500 mPas at 25°C and
the compounds (b) having groups which are reactive toward isocyanates comprise a polyetherol (b1) having a functionality of 4 or more and a viscosity at 25°C of 10 000 mPas or less, a polyetherol (b2) having a functionality of 3.5 or less and a viscosity at 25°C of 600 mPas or less, a polyesterol (b3) having a viscosity at 25°C of 2000 mPas or less, chain extenders (b4) comprising at least 30% secondary OH groups and optionally a crosslinker (b5).

13. An insulating material for liquefied natural gas tanks, which comprises a rigid polyurethane foam according to any of claims 1 to 10.

14. The use of a rigid polyurethane foam according to any of claims 1 to 10 for the insulation of liquefied natural gas tanks, in particular on ships.

## Revendications

1. Mousse dure de polyuréthane, pouvant être obtenue par mélange
a) d'isocyanates
b) de composés présentant des groupes réactifs par rapport aux isocyanates,
c) d'agents gonflants, contenant de l'eau,
d) de catalyseurs et le cas échéant
e) d'autres additifs,
en un mélange réactionnel, application du mélange réactionnel sur un agent de renforcement et durcissement du mélange réactionnel,
les isocyanates (a) présentant une viscosité d'au maximum 500 mPa.s à 25°C et
les composés (b) présentant des groupes réactifs par rapport aux isocyanates contenant un polyétherol (b1) présentant une fonctionnalité de 4 ou plus et une viscosité à 25°C de 10 000 mPa.s ou moins, un polyétherol (b2) présentant une fonctionnalité de 3,5 ou moins et une viscosité à 25°C de 600 mPa.s ou moins, un polyesterol (b3) présentant une viscosité à 25°C de 2000 mPa.s ou moins, des agents d'allongement de chaîne (b4), contenant au moins 30% de groupes OH secondaires et le cas échéant un réticulant (b5).

2. Mousse dure de polyuréthane selon la revendication 1, **caractérisée en ce que** l'agent d'allongement de chaîne (b4) contient du 2,3-butanediol, du monopropylèneglycol, du dipropylèneglycol et/ou du tripropylèneglycol.

3. Mousse dure de polyuréthane selon la revendication 1 ou 2, **caractérisée en ce que** l'agent d'allongement de chaîne (b4) contient du dipropylèneglycol ensemble avec un deuxième agent d'allongement de chaîne, par exemple du 2,3-butanediol ou du diéthylèneglycol.

4. Mousse dure de polyuréthane selon l'une quelconque des revendications 1 à 3, **caractérisée en ce que** la proportion du polyétherol (b1) est de 30 à 60% en poids et celle de l'agent d'allongement de chaîne (b4) est de 2 à 30% en poids, à chaque fois par rapport au poids total du mélange de polyols b).

5. Mousse dure de polyuréthane selon l'une quelconque des revendications 1 à 4, **caractérisée en ce que** la proportion de polyétherols (b1), (b2), (b3), (b4) et le cas échéant (b5) par rapport au composé présentant des groupes réactifs par rapport aux isocyanates (b) est de 100% en poids, par rapport au poids total du composé (b) présentant des groupes réactifs par rapport aux isocyanates.

6. Mousse dure de polyuréthane selon l'une quelconque des revendications 1 à 5, **caractérisée en ce que** la densité moyenne de la mousse de polyuréthane sans agent de renforcement se situe dans la plage de 50-200 g/l.

7. Mousse dure de polyuréthane selon l'une quelconque des revendications 1 à 5, **caractérisée en ce que** la densité moyenne de la mousse de polyuréthane sans agent de renforcement se situe dans la plage de 80-120 g/l.

8. Mousse dure de polyuréthane selon l'une quelconque des revendications 1 à 7, **caractérisée en ce que** l'eau est le seul agent de gonflement.

9. Mousse dure de polyuréthane selon l'une quelconque des revendications 1 à 8, **caractérisée en ce qu'**on utilise, comme catalyseurs d), un mélange de catalyseurs contenant des amines tertiaires.

10. Mousse dure de polyuréthane selon l'une quelconque des revendications 1 à 9, **caractérisée en ce que** l'agent de renforcement consiste en des nappes de fibres de verre et l'agent de renforcement est utilisé à raison de 5 à 15% en poids, par rapport au poids total de la mousse dure de polyuréthane, y compris l'agent de renforcement.

11. Mousse dure de polyuréthane selon l'une quelconque des revendications 1 à 10, **caractérisée en ce que** les autres additifs e) comprennent des plastifiants.

12. Procédé pour la préparation d'une mousse dure de polyuréthane, dans lequel on mélange
a) des isocyanates avec
b) des composés présentant des groupes réactifs par rapport aux isocyanates,
c) des agents gonflants, contenant de l'eau,
d) un mélange de catalyseurs, contenant des amines tertiaires et le cas échéant
e) d'autres additifs,
en un mélange réactionnel, on l'applique sur un agent de renforcement et on le durcit en mousse de polyuréthane,
les isocyanates (a) présentant une viscosité inférieure à 500 mPa.s à 25°C et
les composés (b) présentant des groupes réactifs par rapport aux isocyanates contenant un polyétherol (b1) présentant une fonctionnalité de 4 ou plus et une viscosité à 25°C de 10 000 mPa.s ou moins, un polyétherol (b2) présentant une fonctionnalité de 3,5 ou moins et une viscosité à 25°C de 600 mPa.s ou moins, un polyesterol (b3) présentant une viscosité à 25°C de 2000 mPa.s ou moins et des agents d'allongement de chaîne (b4), contenant au moins 30% de groupes OH secondaires et le cas échéant un réticulant (b5).

13. Matériau isolant pour un réservoir à gaz naturel liquide contenant une mousse dure de polyuréthane selon l'une quelconque des revendications 1 à 10.

14. Utilisation d'une mousse dure de polyuréthane selon l'une quelconque des revendications 1 à 10 pour l'isolation d'un réservoir à gaz naturel liquide, en particulier sur des bateaux.
